# EUROPEAN PATENT APPLICATION

(11) **EP 1 548 954 A1**
(43) Date of publication of application: **29.06.2005**
(21) Application number: 03751658.0
(22) Date of filing: 15.09.2003
(51) Int. Cl.: H04B 3/50

(54) **METHOD FOR TRANSMITTING DIGITAL ELECTRIC SIGNALS**

(30) Priority: 23.09.2002 RU 2002125391
(71) Applicant: Ovchinnikov, Valery Vasilievich, Moscow, 125583 (RU)
(72) Inventor: Ovchinnikov, Valery Vasilievich, Moscow, 125583 (RU)
(74) Representative: Manasse, Uwe, Dr.
(86) International application number: PCT/RU2003/000402
(87) International publication number: WO 2004/028024

(57) **Abstract**

The invention relates to methods for transmitting information, in particular to communication interfaces of electronic devices. The inventive method makes it possible to extend a communication distance and liability improving noise immunity by compensating a noise signal in both wires of a communication line. Said method consists in grounding the first pole of a source and the first wire of the communication line and in connecting the second wire of said line to the second pole of the source through a resistor during digital signals transmission from an transmitter to a receiver which are disposed on a two-wire communication line and provided with the power source. A logical signal is transmitted in a binary code by closing the line by the transmitter with the aid of an electric key and the voltage value of the signal in the second wire is read out with the aid of the receiver when the first wire of the communication line is grounded through an additional resister whose value is equal to that of the first resister.

## Description

### Technical field

The present invention relates to methods for transmitting information, and specifically to communication interfaces of electronic devices.

### Prior art

A method is known for transmitting digital electrical signals in binary code from a transmitter to a receiver, interconnected by a three-wire communication line, with the line voltage supply source combined with the transmitter, including transmission over one wire relative to the common wire (ground) of a logic one and a logic zero from the transmitter by establishing a negative or positive voltage at its output and reading by the receiver of the value of the voltage relative to ground, and transmission of a signal using the same method over the other wire in the opposite direction with the aid of another transmitter-receiver pair. The method is known as the RS 232 interface ("IBM PC hardware". Encyclopedia. St. Petersburg, Izd-vo "Piter", 2001, p. 669).

A disadvantage of the known method is the low noise immunity and short communication distance, usually not more than 10 m. This is explained by the differing conditions for passage of a current in the wires of the line: the resistance in the circuit of the transmitting wires is higher than the resistance in the circuit of the common wire (ground), which facilitates the appearance of a noise voltage under the influence of electromagnetic fields.

Furthermore, the method allows information to be transmitted only to one receiver, and requires that an independent bipolar electrical power supply be arranged for this, which leads to an increase in apparatus cost.

Also known is a method for transmitting digital electrical signals in binary code from a transmitter to a receiver arranged on a three-wire communication line with the line voltage supply source combined with the transmitter, which includes the transmission of a logic one by simultaneously establishing a negative voltage in one wire and a positive voltage in the other wire relative to the third, transmission of a logic zero by establishing a close-to-zero voltage in the first and second wires relative to the logic zero of the third, and reading by the receiver of the voltage values in the first and second wires of the line. The method is known as the RS 485 interface ("Communications hardware". Encyclopedia. St. Petersburg, Izd-vo "Piter", 2001, p. 669).

The method has high noise immunity and long communication distance - up to 1000 m, allows a large number of devices to be interconnected and thus ensures signal transmission in both directions, but, as with the previous method, requires that an independent bipolar electrical power supply be provided for all devices connected to the line, which substantially increases the cost of the method. Furthermore, the separate power supply of the devices and the long communication distance lead to mismatch of their zero bus (ground) potentials, which may lead to the failure of instruments. To prevent this, galvanic decoupling of devices from the line is employed, which leads to additional increase in the cost of the information transmission method.

Closest in technical substance and the result achieved to the method now filed is a method for the transmission of electrical signals via a MicroLAN bus ("Automatic Identification Data-Book", Dallas Semiconductor, 1995; www.Dalsemi.com). The known method for the transmission of digital electrical signals from a transmitter to a receiver which are disposed on a two-wire communication line with a voltage supply source, the first pole of the source and the first wire of the communication line being grounded, while the second wire of the communication line is connected to the second pole of the source via a resistor, includes transmission of a logic signal in binary code by the transmitter closing the line with the aid of an electrical switch and the receiver reading the voltage value in the wire relative to ground. In this case, a logic zero is usually considered to be a signal level less than 50%, and a logic one - more than 50%, of the nominal voltage value in the line. In addition to the MicroLAN interface, many other known interfaces have been constructed in a similar manner.

The method makes it possible to interconnect a large number of devices and to provide signal transmission in both directions over two wires, and permits the power supply of devices from the line, which reduces the cost of the method.

A disadvantage of the known method for transmitting digital electrical signals is its low noise immunity.

### Disclosure of the invention

The present invention is based on the object of improving noise immunity when transmitting electrical signals in a line, while at the same time reducing the cost of the information transmission process.

The stated object is achieved in that, in a method for the transmission of digital electrical signals from a transmitter to a receiver which are disposed on a two-wire communication line with a voltage supply source, the first pole of the source and the first wire of the communication line being grounded, while the second wire of the communication line is connected to the second pole of the source via a resistor, which includes transmission of a logic signal in binary code by the transmitter closing the line with the aid of an electrical switch and the receiver reading the voltage value of the signal in the second wire relative to ground, the first wire of the communication line is grounded via an additional resistor, which has a value equal to the value of the first resistor, and transmission of a signal and reading of the voltage value of a signal are performed relative to the first wire of the line.

The substance of the invention consists in the following.

When both wires of a line are exposed to noise, the result of the exposure may be different, since the conditions for the propagation of noise in the grounded and non-grounded wires of a line are different.

In the present method for transmitting electrical signals, the conditions are identical in both wires of a line, and compensation of the noise signal therefore occurs. In this case, the level of the noise signal is reduced a thousand times, allowing communication to be carried out in conditions in which the noise voltage would greatly exceed the useful signal when using the method according to the prototype.

### Example.

The first pole of the power supply source is connected to the grounding point, while the second wire of the two-wire communication line is connected to the second pole via a resistor. The first wire of the communication line is connected to the grounding point via an additional resistor, equal in value to the first resistor. A receiver and a transmitter are connected to the wires of the communication line at arbitrary locations, the receiver measuring the signal voltage in the first wire relative to the second (floating ground). The normal state of the line corresponds to transmission of a logic one, while a logic zero is generated by the transmitter closing the line.

The wires of the line are placed in an electromagnetic field, creating noise, or a noise voltage is supplied from a generator to both wires of the line. The noise voltage between the wires of the line is measured close to the receiver. As a result of the compensation, the noise voltage proves to be a thousand times less than the noise voltage measured relative to ground.

### Industrial applicability

The advantages of the invention are provided due to the fact that compensation of noise voltage in a line is achieved as a result of ensuring identical signal propagation conditions in both wires of a line. This allows communication distance and reliability to be increased by enhancing noise immunity.

## Claims

1. A method for the transmission of digital electrical signals from a transmitter to a receiver which are disposed on a two-wire communication line with a voltage supply source, the first pole of the source and the first wire of the communication line being grounded, while the second wire of the communication line is connected to the second pole of the source via a resistor, which includes transmission of a logic signal in binary code by the transmitter closing the line with the aid of an electrical switch and the receiver reading the voltage value of the signal in the second wire relative to ground, **characterized in that** the first wire of the communication line is grounded via an additional resistor, which has a value equal to the value of the first resistor, and transmission of a signal and reading of the voltage value of a signal are performed relative to the first wire of the line.
